# EUROPEAN PATENT SPECIFICATION

(11) **EP 4 452 599 B1**
(45) Date of publication and mention of the grant of the patent: **19.11.2025**
(21) Application number: 22817398.5
(22) Date of filing: 28.11.2022
(51) Int. Cl.: B29C 49/02, B29C 49/56, B29C 49/32, B29B 11/12, B29C 49/42

(54) **AN APPARATUS FOR THE CONTINUOUS CYCLE PRODUCTION OF CONTAINERS FROM PLASTIC MATERIAL**
VORRICHTUNG ZUR KONTINUIERLICHEN HERSTELLUNG VON BEHÄLTERN AUS KUNSTSTOFF
APPAREIL DESTINÉ À LA PRODUCTION EN CYCLE CONTINU DE RÉCIPIENTS À PARTIR DE MATIÈRE PLASTIQUE

(30) Priority: 23.12.2021 IT 202100032507
(43) Date of publication of application: 30.10.2024
(73) Proprietor: SACMI COOPERATIVA MECCANICI IMOLA SOCIETA' COOPERATIVA, 40026 Imola (IT)
(72) Inventor: SALLIONI, Andrea, 40062 MOLINELLA (BOLOGNA) (IT); MORDINI, Mattia, 40026 IMOLA (BOLOGNA) (IT); GALDI, Antonio, 40027 MORDANO (BOLOGNA) (IT); GERACI, Lorenzo, 40026 IMOLA (BOLOGNA) (IT)
(74) Representative: Conti, Marco
(86) International application number: PCT/IB2022/061477
(87) International publication number: WO 2023/119012

(56) References cited:
- CA-A1- 2 351 615
- US-A- 4 207 134
- US-A- 4 690 633

## Description

### Technical field

This invention relates to an apparatus and a method for the continuous cycle production of containers from plastic material.

This disclosure addresses the sector of parison forming and parison blowmoulding to make containers from thermoplastic material. More specifically, the sector is that where a plurality of parisons are formed simultaneously and blow-moulded to make a corresponding plurality of containers.

### Background art

Traditionally, in prior art apparatuses used for this purpose, the plastic material is distributed in a plurality of injection moulds to form a plurality of parisons which are then blown in a plurality of blow moulds. This kind of apparatus is described, for example, in patent documents GB1389455A and US2974362A.

Apparatuses of this kind have several disadvantages. One of these is that the plastic must reach very high temperatures so that it can be injected into the parison forming cavity. An apparatus of this kind can therefore be very complex and expensive to make. Moreover, such an apparatus also results in longer production times and higher production costs for the containers.

The patent document US4690633 describes an apparatus, for the production, by compression or injection, of parisons to be blown into containers; this document, however, does not sufficiently describe how the plastic doses are produced, nor does it specify how the preforms are produced.

Other examples of apparatuses for producing containers in a continuous cycle are provided by patent documents CA2351615A1 and US4207134A; Essentially CA2351615A1 suggests apparatuses and methods for the continuous cycle production of containers from plastic material, comprising:
- a metering unit configured to receive from an extruder a flow of molten plastic and including outlets configured to produce a plurality of doses from the flow of molten plastic;
- a forming station including female compression elements which can be positioned at the outlets of the metering unit and which define a plurality of seats configured to receive the doses from the outlets of the metering unit;- male elements acting in conjunction with the female compression elements to delimit a corresponding plurality of forming cavities and being configured to compress the doses by forcing each of them to occupy the respective forming cavity so as to make a plurality of parisons by compression moulding;
- a blow moulding station configured to receive the parisons of the plurality of parisons and to blow mould the plurality of parisons to form a plurality of containers.

However, even these documents do not proide a solution that can meet the needs of the market.

### Disclosure of the invention

This disclosure has for an aim to provide an apparatus and a method for the continuous cycle production of containers from thermoplastic material to overcome the above mentioned disadvantages of the prior art.

Another aim of this invention is to propose an apparatus and a method for the continuous cycle production of containers from high-quality plastic material.

This aim is fully achieved by the apparatus and method of this disclosure as characterized in the appended claims.

This disclosure relates to an apparatus for the continuous cycle production of containers from plastic material. This invention also provides a method for the continuous cycle production of containers of this kind.

The apparatus comprises a metering unit. The metering unit is configured to receive as input a flow of molten plastic. For example, the metering unit may be configured to receive as input a flow of molten plastic from an extruder. An extruder may receive plastic in raw form and feed out a flow of molten plastic. The outfeed section of an extruder may be located at the infeed section of the metering unit to receive a flow of molten plastic.

In an example embodiment, the metering unit is configured to separate predetermined measured quantities of plastic from the flow of molten plastic in order to form respective doses. Preferably, the metering unit is configured to provide a plurality of doses of plastic at its outfeed section. Preferably, the metering unit is configured to provide a plurality of doses of plastic at its outfeed section simultaneously; for this purpose, the metering unit may comprise a plurality of outlets. The plurality of outlets may be configured to generate a corresponding plurality of predetermined measured quantities of plastic, that is to say, a corresponding plurality of doses, from the flow of molten plastic. Preferably, the apparatus comprises a metering unit configured to receive from an extruder a flow of molten plastic and including a plurality of outlets configured to produce a corresponding plurality of doses simultaneously from the flow of molten plastic.

The plurality of outlets may be arranged according to a matrix of outlets, that is to say, in such a way as to form a matrix of m rows and n columns of outlets, where m and n are positive whole numbers. Preferably, the matrix of outlets comprises one row and n columns of outlets, that is to say, the n outlets of the plurality of outlets are arranged in a single line.

The apparatus comprises a forming station. The forming station may be configured to receive a dose fed out by a metering unit. Preferably, the forming station is configured to receive a plurality of doses fed out by a metering unit; for this purpose, the forming station may include a plurality of female elements. More specifically, the plurality of female elements may comprise a corresponding plurality of seats that are configured to receive a plurality of doses simultaneously. Each female element of a plurality of female elements may be located at each outlet of a plurality of outlets of a metering unit so as to receive a respective plurality of doses simultaneously at a corresponding seat of a plurality of seats.

The forming station is configured to form a plurality of plastic items from the plurality of doses, for example, to form parisons by compression or injection-compression. Preferably, the forming station is configured to form a plurality of parisons by compressing a plurality of doses fed out by a metering unit. For this purpose, each female element of a plurality of female elements may preferably constitute a female compression element. Preferably, the apparatus comprises a forming station including a plurality of female compression elements which can be positioned at a plurality of outlets of a metering unit and which define a corresponding plurality of seats configured to receive a plurality of doses simultaneously from the plurality of outlets of the metering unit.

The apparatus includes a plurality of male elements. In an embodiment, a plurality of male elements acts in conjunction with a plurality of female compression elements to delimit a corresponding plurality of forming cavities. A plurality of male elements may be configured to compress a plurality of doses by forcing each of them to occupy a respective forming cavity so as to make a plurality of parisons simultaneously by compression moulding.

Preferably, a plurality of male elements acts in conjunction with a plurality of female compression elements to delimit a corresponding plurality of forming cavities and is configured to compress a plurality of doses by forcing each of them to occupy a respective forming cavity so as to make a plurality of parisons simultaneously by compression moulding.

It should be noted that, with the expression "plurality of seats configured to receive a plurality of doses simultaneously from the plurality of outlets of the metering unit", it is meant that, in the molding process, the seats of the plurality of female elements are configured to receive the plurality of doses coming from the plurality of outlets of the metering unit in at least a first and a second embodiment. According to the first embodiment, the seats receive the plurality of doses directly from the outlets of the metering unit, in particular the plurality of female compression elements can be positioned at a plurality of outlets of the metering unit. In the second embodiment, the seats receive the plurality of doses indirectly, from the plurality of male elements; in this case, the plurality of male elements is configured to receive (directly) the plurality of doses at the outlet from the plurality of outlets of the metering unit, and, in particular, the plurality of male elements can be positioned in correspondence with the plurality of outlets of the metering unit.

In other words, in this second embodiment, the apparatus comprises a forming station, including a plurality of female compression elements, and a plurality of male elements, cooperating with the plurality of female compression elements to delimit a corresponding plurality of forming cavities, the male elements being positionable at the plurality of outlets of the metering unit and the plurality of forming cavities being configured to simultaneously receive the plurality of doses from the plurality of outlets of the metering unit, the male elements being configured to compress the plurality of doses by forcing them to occupy, each, the respective forming cavity, so as to make a plurality of parisons simultaneously by compression moulding.

A plurality of female compression elements and a plurality of male elements may be movable relative to each other along a longitudinal axis between an open position and a closed position. For example, at an open position, a plurality of male elements and a plurality of female compression elements do not interfere with each other. At a closed position, a plurality of female compression elements and a plurality of male elements act in conjunction with each other to delimit a corresponding plurality of forming cavities and to compress a plurality of doses by forcing each of them to occupy a respective forming cavity so as to make a plurality of items, for example parisons, simultaneously by compression moulding.

The plurality of female compression elements may be arranged according to a matrix of female compression elements, that is to say, in such a way as to form a matrix of m rows and n columns of female compression elements, where m and n are positive whole numbers. In a preferred embodiment, the matrix of female compression elements comprises m rows, equal to the number of rows of a matrix of outlets, and comprises n columns, equal to the number of columns of a matrix of outlets. Preferably, the matrix of female compression elements comprises one row and n columns of female compression elements, that is to say, n female compression elements of the plurality of female compression elements are arranged in a single line.

In an example, the matrix of female compression elements constitutes a structure that corresponds to a multi-cavity mould; the female compression elements of the matrix are integral with each other (that is to say, integral with the related structure).

The plurality of male elements may be arranged according to a matrix of male elements, that is to say, in such a way as to form a matrix of m rows and n columns of male elements, where m and n are positive whole numbers. In a preferred embodiment, the matrix of male elements comprises m rows, equal to the number of rows of a matrix of female compression elements and comprises n columns, equal to the number of columns of a matrix of female compression elements. Preferably, the matrix of male elements comprises one row and n columns of male elements, that is to say, n male elements of the plurality of male elements are arranged in a single line.

In an example, the matrix of male elements constitutes a structure that corresponds to a multi-punch mould; the male elements of the matrix are integral with each other (that is to say, integral with the related structure).

The apparatus may comprise an actuating unit, configured to move a plurality of male elements and a plurality of female compression elements along a longitudinal axis in such a way as to compress a plurality of doses by forcing each to occupy a respective forming cavity to make a plurality of parisons by compression moulding. The actuating unit may comprise mechanical actuators (for example, hydraulic or screw type) or electrical actuators to move a plurality of male elements and a plurality of female compression elements relative to each other along the longitudinal axis. In one example, the actuating unit can comprise traditional hydraulic actuators or hydraulic actuators with servo-pump, for example without an oil station.

In an example, the actuating units comprise one or more direct actuators; each direct actuator of the one or more direct actuators may include a linear motor or a pneumatic cylinder, or the direct actuator may include a rack and pinion. In another example, the actuator units may comprise one or more toggle mechanisms to move a plurality of male elements and a plurality of female compression elements relative to each other along the longitudinal axis to compress a plurality of doses in such a way as to make a plurality of parisons by compression moulding.

In an example, the actuating unit is connected to the structure of the plurality of female compression elements to move them (vertically) along the longitudinal axis towards the corresponding male elements; preferably, the female compression elements rise simultaneously to interact with the male elements to compress the doses.

The apparatus comprises a blow moulding station. The blow moulding station may be a rotary station or an index station or, preferably, the blow moulding station may be a linear station.

In an embodiment, the blow moulding station is configured to receive parisons. Preferably, the blow moulding station is configured to receive a plurality of parisons. For example, the blow moulding station can receive a plurality of parisons simultaneously from a plurality of male elements.

The blow moulding station may be configured to blow mould a plurality of parisons to make a corresponding plurality of containers. Preferably, the blow moulding station is configured to receive parisons of a plurality of parisons and to blow mould the plurality of parisons to form a corresponding plurality of containers. For this purpose, the blow moulding station may include a plurality of female blow moulding elements. The plurality of female blow moulding elements may be configured to act in conjunction with a plurality of male elements to delimit a plurality of corresponding blow moulding cavities. For example, the blow moulding station may be configured to blow into a plurality of blow moulding cavities simultaneously a plurality of parisons housed in the plurality of blow moulding cavities.

The plurality of female blow moulding elements may be arranged according to a matrix of female blow moulding elements, that is to say, in such a way as to form a matrix of m rows and n columns of female blow moulding elements, where m and n are positive whole numbers.

In an example, the matrix of female blow moulding elements constitutes a structure that corresponds to a multi-cavity mould; the female blow moulding elements of the matrix are integral with each other (that is to say, integral with the related structure).

In a preferred embodiment, the matrix of female blow moulding elements comprises m rows, equal to the number of rows of a matrix of male elements and comprises n columns, equal to the number of columns of a matrix of male elements. Preferably, the matrix of female blow moulding elements comprises one row and n columns of female blow moulding elements, that is to say, n female blow moulding elements of the plurality of female blow moulding elements are arranged in a single line.

In an example embodiment, the blow moulding station, includes a first half blow mould and a second half blow mould which are movable relative to each other along a transverse axis between a closed position and an open position. For example, at the open position of a first and a second half blow mould, the blow moulding station is configured to receive parisons in a plurality of female blow moulding elements; at the open position of a first and a second half blow mould of a blow moulding station, for example, a plurality of male elements is configured to remove blow moulded containers from a plurality of female blow moulding elements. At a closed position of a first and a second half blow mould of a blow moulding station, the blow moulding station acts in conjunction with a plurality of male elements to blow mould parisons to form containers.

The first half blow mold and the second half blow can both be movable; alternatively, one of the first half blow mold and the second half blow mold remains stationary while the other half mold moves towards and/or away.

In an embodiment, the apparatus comprises an additional blow moulding station. The additional blow moulding station is configured to receive a plurality of parisons. For example, the additional blow moulding station is configured to receive a plurality of parisons from a plurality of male elements.

The additional blow moulding station may be configured to blow mould a plurality of parisons to form a corresponding plurality of containers. Preferably, the additional blow moulding station is configured to receive parisons of a plurality of parisons and to blow mould the plurality of parisons to form a corresponding plurality of containers. For this purpose, the additional blow moulding station may include a corresponding additional plurality of female blow moulding elements. The additional plurality of female blow moulding elements may be configured to act in conjunction with a plurality of male elements to delimit a corresponding additional plurality of blow moulding cavities. For example, the additional blow moulding station may be configured to simultaneously blow into the additional plurality of blow moulding cavities a plurality of parisons housed in the additional plurality of blow moulding cavities, while an additional plurality of parisons is made by compression moulding in a plurality of female compression elements.

The plurality of female blow moulding elements may be arranged according to an additional matrix of female blow moulding elements, that is to say, in such a way as to form an additional matrix of m rows and n columns of female blow moulding elements, where m and n are positive whole numbers. In a preferred embodiment, the additional matrix of female blow moulding elements comprises m rows, equal to the number of rows of a matrix of male elements and comprises n columns, equal to the number of columns of a matrix of male elements. Preferably, the additional matrix of female blow moulding elements comprises one row and n columns of female blow moulding elements, that is to say, n female blow moulding elements of the additional plurality of female blow moulding elements are arranged in a single line.

In an example, the additional matrix of female blow moulding elements constitutes a structure that corresponds to a multi-cavity mould; the female blow moulding elements of the additional matrix are integral with each other (that is to say, integral with the related structure).

In an embodiment, the apparatus may comprise an additional plurality of male elements. For example, an additional plurality of male elements acts in conjunction with a plurality of female compression elements to delimit a corresponding plurality of forming cavities. An additional plurality of male elements may be configured to compress a plurality of doses by forcing each of them to occupy a respective forming cavity so as to make a plurality of parisons simultaneously by compression moulding. Preferably, an additional plurality of male elements acts in conjunction with a plurality of female compression elements to delimit a corresponding plurality of forming cavities and is configured to compress a plurality of doses by forcing each of them to occupy a respective forming cavity so as to make a plurality of parisons simultaneously by compression moulding.

The additional plurality of male elements and a plurality of female compression elements may be movable relative to each other along a longitudinal axis between an open position and a closed position. For example, at an open position, an additional plurality of male elements and a plurality of female compression elements do not interfere with each other. At a closed position, a plurality of female compression elements and an additional plurality of male elements act in conjunction with each other to delimit a corresponding plurality of forming cavities. At a closed position, an additional plurality of male elements and a plurality of female compression elements act in conjunction with each other to compress an additional plurality of doses so as to force each of them to occupy a respective forming cavity so as to make an additional plurality of items, for example parisons, simultaneously by compression moulding.

The additional plurality of male elements may be arranged according to an additional matrix of male elements, that is to say, in such a way as to form an additional matrix of m rows and n columns of male elements, where m and n are positive whole numbers. In a preferred embodiment, the additional matrix of male elements comprises m rows, equal to the number of rows of a matrix of female compression elements and comprises n columns, equal to the number of columns of a matrix of female compression elements. Preferably, the additional matrix of male elements comprises one row and n columns of male elements, that is to say, n male elements of the additional plurality of male elements are arranged in a single line.

In an example, the additional matrix of male elements constitutes a structure that corresponds to a multi-punch mould; the male elements of the additional matrix are integral with each other (that is to say, integral with the related structure).

Preferably, an additional blow moulding station is configured to receive an additional plurality of parisons from an additional plurality of male elements. An additional plurality of female blow moulding elements may be configured to act in conjunction with an additional plurality of male elements to delimit a corresponding additional plurality of blow moulding cavities.

In an example embodiment, an additional blow moulding station, includes a first half blow mould and a second half blow mould which are movable relative to each other along a first transverse axis between a closed position and an open position. For example, at the open position of a first and a second half blow mould of an additional blow moulding station, the additional blow moulding station is configured to receive parisons in an additional plurality of female blow moulding elements; at the open position of a first and a second half blow mould of an additional blow moulding station, for example, a plurality of male elements is configured to remove blow moulded containers from an additional plurality of female blow moulding elements. At a closed position of a first and a second half blow mould of an additional blow moulding station, the additional blow moulding station acts in conjunction with a plurality of male elements to blow mould parisons to form containers.

The first half blow mould and the second half blow mould of the additional blow molding station can both be movable; alternatively, one of the first half blow mould and the second half blow mould remains stationary while the other half blow mould moves towards and/or away.

In an embodiment, a plurality of male elements and an additional plurality of male elements are configured to act in conjunction with a plurality of female compression elements to delimit a corresponding plurality of forming cavities. A plurality of male elements and an additional plurality of male elements are configured to act in conjunction with the plurality of female blow moulding elements and with the additional plurality of female blow moulding elements, respectively; that way, while a plurality of parisons is being made by compression by a plurality of male elements, an additional plurality of parisons may be blow moulded by an additional plurality of male elements to form containers.

In an embodiment, a plurality of male elements is movable along a second transverse axis between a moulding position, where it is associated with a plurality of female compression elements, and a blow moulding position, where it is associated with a plurality of female blow moulding elements. An additional plurality of male elements may be movable along a second transverse axis between a moulding position, where it is associated with a plurality of female compression elements, and a blow moulding position, where it is associated with a plurality of female blow moulding elements. Preferably, each of a plurality of male elements and an additional plurality of male elements is movable with reciprocating motion between a moulding position, where it is associated with a plurality of female compression elements, and a blow moulding position, where it is associated with a plurality of female blow moulding elements or with an additional plurality of female blow moulding elements, respectively. More specifically, while a plurality of male elements is at the moulding position to form a plurality of parisons simultaneously by compression, an additional plurality of male elements is at the blow moulding position to blow mould an additional plurality of parisons simultaneously to form containers; conversely, while an additional plurality of male elements is at the moulding position to form an additional plurality of parisons simultaneously by compression, a plurality of male elements is at the blow moulding position to blow mould a plurality of parisons simultaneously to form containers.

More specifically, a plurality of male elements and an additional plurality of male elements are movable with reciprocating motion along a second transverse axis between a moulding position and a blow moulding position.

In an example embodiment, a plurality of female compression elements is movable with reciprocating motion along a first transverse axis between a retracted position and an advanced position. For example, at a retracted position, the female compression elements of a plurality of female compression elements interact with a metering unit to receive respective doses and, at an advanced position, the female compression elements of a plurality of female compression elements are aligned with the male elements of a plurality of male elements or with the male elements of an additional plurality of male elements to act in conjunction therewith.

In an example embodiment, the metering unit comprises a plurality of metering heads. Each metering head of the plurality of metering heads may be located at a respective outlet of a plurality of outlets of a metering unit.

Each metering head and each female compression element of the plurality of female compression elements may be movable relative to each other along a longitudinal axis between a spaced apart position and a close together position. At the close together position, for example, each metering head may be operatively inserted into a corresponding seat defined by a female compression element of the plurality of female compression elements. More specifically, at the close together position, each metering head may be operatively inserted into a corresponding seat defined by a female compression element of the plurality of female compression elements when the plurality of female compression elements is at the retracted position. At the close together position, for example, the plurality of metering heads and the plurality of female compression elements act in conjunction with each other to insert a respective plurality of doses into a corresponding plurality of seats of a plurality of female compression elements. At the spaced apart position, for example, the plurality of metering heads and the plurality of female compression elements do not interfere with each other.

The plurality of metering heads may be arranged according to a matrix of metering heads, that is to say, in such a way as to form a matrix of m rows and n columns of metering heads, where m and n are positive whole numbers. In a preferred embodiment, the matrix of metering heads comprises m rows, equal to the number of rows of a matrix of female compression elements and comprises n columns, equal to the number of columns of a matrix of female compression elements. Preferably, the matrix of metering heads comprises one row and n columns of metering heads, that is to say, the n metering heads of the plurality of metering heads are arranged in a single line.

In an example embodiment, the apparatus comprises an unloading station. For example, the unloading station may be configured to house compression moulded items or blow moulded containers. For example, the unloading station may include a plurality of unloading elements that define a corresponding plurality of unloading cavities, each unloading cavity being configured to house blow moulded containers.

The unloading station may act in conjunction with a plurality of male elements to receive a plurality of blow moulded containers from the plurality of male elements.

The plurality of unloading elements may be arranged according to a matrix of unloading elements, that is to say, in such a way as to form a matrix of m rows and n columns of unloading elements, where m and n are positive whole numbers. In a preferred embodiment, the matrix of unloading elements comprises m rows, equal to the number of rows of a matrix of male elements and comprises n columns, equal to the number of columns of a matrix of male elements. Preferably, the matrix of unloading elements comprises one row and n columns of unloading elements, that is to say, n unloading elements of the plurality of unloading elements are arranged in a single line.

The unloading station may act in conjunction with an additional plurality of male elements to receive an additional plurality of blow moulded containers from the additional plurality of male elements.

Preferably, the plurality of unloading elements acts in conjunction with a plurality of male elements and an additional plurality of male elements to receive a respective plurality of blow moulded containers from the plurality of male elements and from the additional plurality of male elements, alternately.

The apparatus may comprise a conveyor belt, configured to transport blow moulded containers.

In an example embodiment, the unloading statin is configured to release blow moulded containers onto the conveyor belt.

The unloading station can move between a retracted position and an advanced position along a first transverse axis; at a retracted position, the unloading elements of a plurality of unloading elements can interact with a plurality of male elements to receive blow moulded containers. Preferably, at a retracted position, the unloading elements of the plurality of unloading elements interact with a plurality of male elements and an additional plurality of male elements, alternately, to receive blow moulded containers. At an advanced position, the unloading elements of a plurality of unloading elements interact with a conveyor belt to release blow moulded containers onto the conveyor belt to be transported out of the apparatus.

In an example embodiment, the unloading station is integral with a plurality of female compression elements and is movable along a first transverse axis between a retracted position and an advanced position. For example, at a retracted position, the unloading elements of a plurality of unloading elements interact with a plurality of male elements and an additional plurality of male elements, alternately, to receive blow moulded containers, and the female compression elements of a plurality of female compression elements interact with a metering unit to receive respective doses. At an advanced position, the unloading elements of the plurality of unloading elements interact with a conveyor belt to release blow moulded containers onto the conveyor belt to be transported out of the apparatus, and the female compression elements of the plurality of female compression elements are aligned with the male elements of a plurality of male elements or an additional plurality of male elements to act in conjunction therewith.

In an example embodiment, a plurality of male elements is movable with reciprocating motion between a moulding position, a blow moulding position and an unloading position. For example, at a moulding position, a plurality of male elements is associated with a plurality of female compression elements. At a blow moulding position, a plurality of male elements is associated with a plurality of female blow moulding elements. At an unloading position, a plurality of male elements is associated with a plurality of unloading elements.

In an example embodiment, an additional plurality of male elements is movable with reciprocating motion between a moulding position, a blow moulding position and an unloading position. For example, at a moulding position, an additional plurality of male elements is associated with a plurality of female compression elements. At a blow moulding position, an additional plurality of male elements is associated with a plurality of female blow moulding elements. At an unloading position, an additional plurality of male elements is associated with a plurality of unloading elements.

Preferably, when a plurality of male elements is at a blow moulding position, an additional plurality of male elements is at a position between an unloading position and a moulding position; similarly, when an additional plurality of male elements is at a blow moulding position, a plurality of male elements is at a position between an unloading position and a moulding position.

In one example, the plurality of female blow moulding elements (and/or the additional plurality of female blow moulding elements) are configured to release the plurality of blow moulded containers, in particular on a conveying device (e.g. a conveyor belt). The conveying device may be configured to transport the blow moulded containers to an outlet of the apparatus. The conveying device can be configured to receive the containers, for example in a disorderly or orderly manner, starting from the plurality of female blow moulding elements and/or additional female blow moulding elements. The blow moulded containers can be transported in a disorderly manner, or in an orderly manner from the blow moulding station to an outlet of the apparatus.

This disclosure also provides a system for the continuous cycle production of items from plastic material.

Such a system comprises a metering unit configured to receive from an extruder a flow of molten plastic and including a plurality of outlets configured to produce a corresponding plurality of doses simultaneously from the flow of molten plastic; the system also comprises a forming station including a plurality of female compression elements which can be positioned at the plurality of outlets of the metering unit and which define a corresponding plurality of seats configured to receive the plurality of doses simultaneously from the plurality of outlets of the metering unit; the system also comprises a plurality of male elements acting in conjunction with a plurality of female compression elements to delimit a corresponding plurality of forming cavities and being configured to compress the plurality of doses by forcing each of them to occupy a respective forming cavity so as to make a plurality of items simultaneously by compression moulding. The items of plastic material thus obtained may be of different kinds and used for different purposes; in an example, the items are parisons intended for blow moulding to form containers.

This disclosure also provides a method for the continuous cycle production of containers from plastic material.

The method comprises a step of receiving a flow of molten plastic in a metering unit.

The method may comprise a step of producing a flow of molten plastic through an extruder. For example, the method may comprise a step of producing a flow of molten plastic through an extruder, starting from plastic in raw form. The method may also comprise a step of transferring a flow of molten plastic from an extruder to a metering unit.

In an embodiment, the method comprises a step of separating predetermined measured quantities of plastic from the flow of molten plastic in order to form respective doses. The method may comprise a step of separating from a flow of molten plastic a plurality of doses simultaneously through a respective plurality of outlets of a metering unit.

The method may comprise a step of arranging a plurality of outlets according to a matrix of outlets, that is to say, in such a way as to form a matrix of m rows and n columns of outlets, where m and n are positive whole numbers. Preferably, the matrix of outlets comprises one row and n columns of outlets, that is to say, the n outlets of the plurality of outlets are arranged in a single line.

The method may comprise a step of providing a forming station that is configured to receive a dose. The method may comprise a step of providing a forming station that is configured to receive a plurality of doses; the forming station may be configured to form a plurality of plastic items, for example, parisons, from a plurality of doses which are fed out, for example, by a metering unit.

The method comprises a step of providing a plurality of female compression elements to define a corresponding plurality of seats. The method may include a step of receiving a plurality of doses in a corresponding plurality of seats of a plurality of female compression elements. Preferably, the method may include a step of simultaneously receiving a plurality of doses in a plurality of seats of a plurality of female compression elements.

In an example embodiment, the method comprises a step of providing each female element of a plurality of female compression elements at each outlet of a plurality of outlets of a metering unit so as to receive a respective plurality of doses simultaneously.

For example, the method may comprise a step of arranging a plurality of female compression elements according to a matrix of female compression elements, that is to say, in such a way as to form a matrix of m rows and n columns of female compression elements, where m and n are positive whole numbers. Preferably, the matrix of female compression elements comprises one row and n columns of female compression elements, that is to say, n female compression elements of the plurality of female compression elements are arranged in a single line. In a preferred embodiment of the method, the matrix of female compression elements comprises m rows, equal to the number of rows of a matrix of outlets, and comprises n columns, equal to the number of columns of a matrix of outlets.

The method comprises a step of providing a plurality of male elements that is configured to act in conjunction with a plurality of female compression elements. The method may comprise a step of providing a plurality of male elements that is configured to act in conjunction with a plurality of female compression elements to define a corresponding plurality of forming cavities.

For example, the method may comprise a step of arranging a plurality of male elements according to a matrix of male elements, that is to say, in such a way as to form a matrix of m rows and n columns of male elements, where m and n are positive whole numbers. Preferably, the matrix of male elements comprises one row and n columns of male elements, that is to say, n male elements of the plurality of male elements are arranged in a single line. In an embodiment of the method, the matrix of male elements comprises m rows, equal to the number of rows of a matrix of female compression elements and comprises n columns, equal to the number of columns of a matrix of female compression elements.

The method may comprise a step of moving a female compression element and a plurality of outlets of a metering unit relative to each other along a longitudinal axis. For example, the method may comprise a step of moving a female compression element along a longitudinal axis between a retracted position and an advanced position.

For example, the method may comprise a step of moving to a retracted position, where female compression elements interact with a plurality of outlets of a metering unit in order to receive respective doses.

The method may comprise a step of moving to a close together position, where, for example, female elements of a plurality of female compression elements interact with a plurality of male elements male to compress a plurality of doses in such a way as to force each of them to occupy a respective forming cavity so as to make a plurality of items, for example parisons, simultaneously by compression moulding.

The method may comprise a step of moving a plurality of male elements and a plurality of female compression elements relative to each other along a longitudinal axis. The method may comprise a step of moving a plurality of male elements and a plurality of female compression elements towards each other. The step of relative movement may occur between an open position and a closed position. For example, at an open position, a plurality of male elements and a plurality of female compression elements do not interfere with each other. At a closed position, a plurality of female compression elements and a plurality of male elements act in conjunction with each other to delimit a corresponding plurality of forming cavities. At a closed position, a plurality of male elements and a plurality of female compression elements act in conjunction with each other to compress a plurality of doses so as to force each of them to occupy a respective forming cavity so as to make a plurality of items, for example parisons, simultaneously by compression moulding.

For this purpose, the method comprises a step of compressing each dose into a respective forming cavity by means of a plurality of male elements so as to make a plurality of parisons simultaneously by compression moulding.

The method may comprise a step of moving a plurality of male elements and a plurality of female compression elements away from each other along a longitudinal axis.

The method may comprise a step of providing a blow moulding station for the blow moulding of parisons. The method may comprise a step of receiving a plurality of moulded parisons in a blow moulding station. The method may also comprise a step of receiving a plurality of moulded parisons in a blow moulding station and blow moulding the plurality of parisons to form a corresponding plurality of containers.

The method may comprise a step of transporting a plurality of parisons to a blow moulding station along a second transverse axis by means of a plurality of male elements.

In an example embodiment, the method may comprise a step of providing a plurality of female blow moulding elements in a blow moulding station. Preferably, the method comprises a step of blow moulding a plurality of parisons simultaneously inside a plurality of female blow moulding elements. For this purpose, the method may comprise a step of a plurality of female blow moulding elements and a plurality of male elements acting in conjunction to define a corresponding plurality of blow moulding cavities. The method may comprise a step of arranging a plurality of female blow moulding elements according to a matrix of female blow moulding elements, that is to say, in such a way as to form a matrix of m rows and n columns of female blow moulding elements, where m and n are positive whole numbers. In a preferred embodiment, the matrix of female blow moulding elements comprises m rows, equal to the number of rows of a matrix of male elements and comprises n columns, equal to the number of columns of a matrix of male elements. Preferably, the matrix of female blow moulding elements comprises one row and n columns of female blow moulding elements, that is to say, n female blow moulding elements of the plurality of female blow moulding elements are arranged in a single line.

In an example, the method comprises a step of moving a first half blow mould and a second half blow mould of a blow moulding station along a first transverse axis between a closed position and an open position. For example, at the open position of a first and a second half blow mould, the blow moulding station is configured to receive parisons in a plurality of female blow moulding elements; at the open position of a first and a second half blow mould of a blow moulding station, for example, a plurality of male elements is configured to remove blow moulded containers from a plurality of female blow moulding elements. At a closed position of a first and a second half blow mould of a blow moulding station, the blow moulding station acts in conjunction with a plurality of male elements to blow mould parisons to form containers.

The step of moving can take place by moving both half blow moulds towards and/or away, or by moving one half blow mould between the first and second half blow mould while the other half blow mould remains stationary.

The method may comprise a step of moving a plurality of male elements and a blow moulding station relative to each other along a second transverse axis. For example, the method may comprise a step of moving between a moulding position and a blow moulding position along a second transverse axis. For example, at a moulding position, a plurality of male elements is associated with a plurality of female compression elements. At a blow moulding position, a plurality of male elements is associated with a plurality of female blow moulding elements.

The method may comprise a step of providing an additional blow moulding station for the blow moulding of parisons. The method may comprise a step of receiving a plurality of moulded parisons in an additional blow moulding station. The method may also comprise a step of receiving a plurality of moulded parisons in an additional blow moulding station and blow moulding the plurality of parisons to form a corresponding plurality of containers while another plurality of parisons is made by compression moulding in a plurality of female compression elements.

The method may comprise a step of transporting a plurality of parisons to an additional blow moulding station along a second transverse axis by means of a plurality of male elements.

In an example embodiment, the method may comprise a step of providing an additional plurality of female blow moulding elements. Preferably, the method comprises a step of blow moulding a plurality of parisons simultaneously inside an additional plurality of female blow moulding elements. For this purpose, the method may comprise a step of an additional plurality of female blow moulding elements and a plurality of male elements acting in conjunction to delimit a corresponding additional plurality of blow moulding cavities.

The method may comprise a step of providing an additional plurality of male elements that is configured to act in conjunction with a plurality of female compression elements. The method may comprise a step of providing an additional plurality of male elements that is configured to act in conjunction with a plurality of female compression elements to define a corresponding plurality of forming cavities.

For example, the method may comprise a step of arranging an additional plurality of male elements according to a matrix of male elements, that is to say, in such a way as to form an additional matrix of m rows and n columns of male elements, where m and n are positive whole numbers. Preferably, the additional matrix of male elements comprises one row and n columns of male elements, that is to say, n male elements of the additional plurality of male elements are arranged in a single line. In a preferred embodiment of the method, the additional matrix of male elements comprises m rows, equal to the number of rows of a matrix of female compression elements and comprises n columns, equal to the number of columns of a matrix of female compression elements.

The method may comprise a step of moving an additional plurality of male elements and a plurality of female compression elements relative to each other along a longitudinal axis. The method may comprise a step of moving an additional plurality of male elements and a plurality of female compression elements towards each other. A step of relative movement may occur between an open position and a closed position. For example, at an open position, an additional plurality of male elements and a plurality of female compression elements do not interfere with each other. At a closed position, a plurality of female compression elements and an additional plurality of male elements act in conjunction with each other to delimit a corresponding plurality of forming cavities. At a closed position, an additional plurality of male elements and a plurality of female compression elements act in conjunction with each other to compress a plurality of doses so as to force each of them to occupy a respective forming cavity so as to make a plurality of items, for example parisons, simultaneously by compression moulding.

For this purpose, the method comprises a step of compressing each dose into a respective forming cavity by means of an additional plurality of male elements so as to make a plurality of parisons simultaneously by compression moulding.

The method may comprise a step of moving an additional plurality of male elements and a plurality of female compression elements away from each other to an open position.

In an embodiment, the method comprises a step of receiving an additional plurality of parisons from an additional plurality of male elements in an additional blow moulding station.

The method may comprise a step of transporting a plurality of parisons to an additional blow moulding station along a second transverse axis by means of a plurality of male elements.

The method may comprise a step of an additional plurality of female blow moulding elements and an additional plurality of male elements acting in conjunction to delimit a corresponding additional plurality of blow moulding cavities.

The method may comprise a step of arranging an additional plurality of female blow moulding elements according to an additional matrix of female blow moulding elements, that is to say, in such a way as to form a matrix of m rows and n columns of female blow moulding elements, where m and n are positive whole numbers. In a preferred embodiment, the additional matrix of female blow moulding elements comprises m rows, equal to the number of rows of a matrix of male elements and comprises n columns, equal to the number of columns of an additional matrix of male elements. Preferably, the additional matrix of female blow moulding elements comprises one row and n columns of female blow moulding elements, that is to say, n female blow moulding elements of the additional plurality of female blow moulding elements are arranged in a single line.

In an example, the method comprises a step of moving a first half blow mould and a second half blow mould of an additional blow moulding station along a first transverse axis between a closed position and an open position. For example, at the open position of a first and a second half blow mould of an additional blow moulding station, the additional blow moulding station is configured to receive parisons in a plurality of female blow moulding elements; at the open position of a first and a second half blow mould of an additional blow moulding station, for example, an additional plurality of male elements is configured to remove blow moulded containers from a plurality of female blow moulding elements. At a closed position of a first and a second half blow mould of a blow moulding station, the blow moulding station acts in conjunction with an additional plurality of male elements to blow mould parisons to form containers.

The step of moving can take place by moving both half blow moulds towards and/or away, or by moving one half blow mould between the first and second half blow mould while the other half blow mould remains stationary.The method may comprise a step of moving an additional plurality of male elements and an additional blow moulding station relative to each other along a second transverse axis. For example, the method may comprise a step of moving between a moulding position and a blow moulding position. For example, at a moulding position, an additional plurality of male elements is associated with a plurality of female compression elements. At a blow moulding position, an additional plurality of male elements is associated with a plurality of female blow moulding elements.

The method may comprise a step of providing a plurality of metering heads of a metering unit. For example, the method may comprise a step of placing a plurality of metering heads at a respective outlet of a plurality of outlets of a metering unit.

The method may comprise a step of arranging a plurality of metering heads according to a matrix of metering heads, that is to say, in such a way as to form a matrix of m rows and n columns of metering heads, where m and n are positive whole numbers. In a preferred embodiment, the matrix of metering heads comprises m rows, equal to the number of rows of a matrix of female compression elements and comprises n columns, equal to the number of columns of a matrix of female compression elements. Preferably, the matrix of metering heads comprises one row and n columns of metering heads, that is to say, the n metering heads of the plurality of metering heads are arranged in a single line.

The method may comprise a step of moving a plurality of female compression elements and a plurality of metering heads relative to each other along a longitudinal axis between a close together position and a spaced apart position. At the close together position, for example, each metering head may be operatively inserted into a corresponding seat defined by a female compression element of the plurality of female compression elements. More specifically, at the close together position, each metering head may be operatively inserted into a corresponding seat defined by a female compression element of the plurality of female compression elements when the plurality of female compression elements is at the retracted position. At the close together position, for example, the plurality of metering heads and the plurality of female compression elements act in conjunction with each other to insert a respective plurality of doses into a corresponding plurality of seats of a plurality of female compression elements. At the spaced apart position, for example, the plurality of metering heads and the plurality of female compression elements do not interfere with each other.

The method may comprise a step of providing an unloading station to house compression moulded items or, preferably, blow moulded containers. The method may comprise a step of providing a plurality of unloading elements, defining a corresponding plurality of unloading cavities to house the blow moulded containers.

The method may comprise a step of unloading a plurality of blow moulded containers from a plurality of male elements onto an unloading station.

In an example embodiment, the method comprises a step of unloading a plurality of containers from a plurality of male elements into a corresponding plurality of unloading elements of an unloading station.

The method may comprise a step of arranging a plurality of unloading elements according to a matrix of unloading elements, that is to say, in such a way as to form a matrix of m rows and n columns of unloading elements, where m and n are positive whole numbers. In a preferred embodiment, the matrix of unloading elements comprises m rows, equal to the number of rows of a matrix of male elements and comprises n columns, equal to the number of columns of a matrix of male elements. Preferably, the matrix of unloading elements comprises one row and n columns of unloading elements, that is to say, n unloading elements of the plurality of unloading elements are arranged in a single line.

The method may comprise a step of unloading an additional plurality of blow moulded containers from an additional plurality of male elements onto an unloading station.

In an example embodiment, the method comprises a step of unloading a plurality of containers from an additional plurality of male elements into a corresponding plurality of unloading elements of an unloading station.

Preferably, the method comprises a step of unloading from a plurality of unloading elements and from an additional plurality of male elements to receive a respective plurality of blow moulded containers from the plurality of male elements and from the additional plurality of male elements, alternately.

The method may comprise a step of providing a conveyor belt that is configured to transport blow moulded containers. For example, the method comprises a step of releasing the blow moulded containers onto a conveyor belt, for example, from an unloading station.

The method may comprise a step of moving an unloading station between a retracted position and an advanced position along a first transverse axis. At a retracted position, for example, the unloading elements of a plurality of unloading elements can interact with a plurality of male elements to receive blow moulded containers. Preferably, at a retracted position, the unloading elements of the plurality of unloading elements interact with a plurality of male elements and an additional plurality of male elements, alternately, to receive blow moulded containers. At an advanced position, the unloading elements of a plurality of unloading elements interact with a conveyor belt to release blow moulded containers onto the conveyor belt to be transported out of the apparatus.

In an example embodiment, the method comprises a step of providing an unloading station made as one with a plurality of female compression elements.

For example, at a retracted position, the unloading elements of a plurality of unloading elements interact with a plurality of male elements and an additional plurality of male elements, alternately, to receive blow moulded containers, and the female compression elements of a plurality of female compression elements interact with a metering unit to receive respective doses. At an advanced position, the unloading elements of the plurality of unloading elements interact with a conveyor belt to release blow moulded containers onto the conveyor belt to be transported out of the apparatus, and the female compression elements of the plurality of female compression elements are aligned with the male elements of a plurality of male elements to act in conjunction therewith.

**In** one example, the method comprises a step for releasing the plurality of blow moulded containers, by the plurality of female blow moulding elements (and/or the additional plurality of female blow moulding elements), in particular on a conveying device (for example a conveyor belt).

The method may comprise a step of transporting the blow moulded containers towards an outlet of the apparatus. The method can include a step of receiving the containers, for example in a disorderly or orderly manner, starting from the plurality of female blow moulding elements and/or additional female blow moulding elements. The blow moulded containers can be transported in a disorderly manner, or in an orderly manner from the blow moulding station to an outlet of the apparatus.

In an embodiment of the method, a step of blow moulding in a plurality of female blow moulding elements by means of a plurality of male elements occurs simultaneously with a step of moulding in a plurality of female compression elements and with a step of unloading into a plurality of unloading elements from an additional plurality of male elements.

Conversely, according to the method, a step of blow moulding in an additional plurality of female blow moulding elements by means of an additional plurality of male elements occurs simultaneously with a step of moulding in a plurality of female compression elements and with a step of unloading into a plurality of unloading elements from a plurality of male elements; that way, while a plurality of parisons is being blow moulded to form containers, a plurality of previously blow moulded containers is transferred to the unloading station and an additional plurality of parisons is moulded by compression.

This disclosure also provides a method for the continuous cycle production of items from plastic material.

The method comprises: a step of receiving in a metering unit a flow of molten plastic produced by an extruder; a step of separating from the flow of molten plastic a plurality of doses simultaneously through a respective plurality of outlets of the metering unit; a step of providing a plurality of female compression elements to define a corresponding plurality of seats; the method also comprises a step of receiving the plurality of doses in the corresponding plurality of seats of the plurality of female compression elements; a step of providing a plurality of male elements that is configured to act in conjunction with the plurality of female compression elements and a step of compressing to define a corresponding plurality of forming cavities; a step of compressing each dose into a respective forming cavity by means of the plurality of male elements so as to make a plurality of parisons simultaneously by compression moulding. The items of plastic material thus obtained may be of different kinds and used for different purposes; in an example, the items are parisons intended for blow moulding to form containers.

### Brief description of drawings

These and other features will become more apparent from the following description of a preferred embodiment, illustrated by way of non-limiting example in the accompanying drawings, in which:
- Figure 1 illustrates an apparatus for the continuous cycle production of containers according to this disclosure;
- Figures 2 to 8 illustrate the apparatus of Figure 1 in a succession of operating configurations;

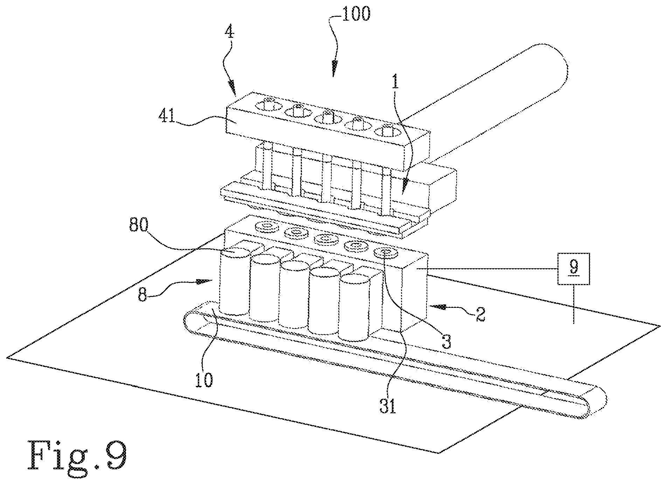

- Figure 9 illustrates an apparatus for the continuous cycle production of items from plastic material according to this disclosure;
- Figures 10A, 10B, 10C, 10D, 10E illustrate the apparatus according to one or more features set out in this disclosure.

### Detailed description of preferred embodiments of the invention

The numeral 100 in the accompanying drawings denotes an apparatus for the continuous cycle production of containers from plastic material.

The apparatus 100 comprises a metering unit 1. The metering unit 1 is configured to receive as input a flow of molten plastic from an extruder. The metering unit 1 comprises a plurality of outlets configured to produce a corresponding plurality of doses of plastic from the flow of molten plastic simultaneously.

The plurality of outlets is arranged according to a matrix of outlets; more specifically, the matrix of outlets includes one row and n columns of outlets, that is to say, the n outlets of the plurality of outlets are arranged in a single line.

The apparatus 100 comprises a forming station 2. In the embodiments illustrated, the forming station 2 is a station for forming parisons by compression. More specifically, the forming station 2 is configured to receive a plurality of doses fed out through the outlets of the metering unit 1. The forming station 2 includes a plurality of female compression elements 3. The plurality of female compression elements 3 comprises a corresponding plurality of seats that are configured to receive the plurality of doses simultaneously. More specifically, each female element of a plurality of female compression elements 3 is located at each outlet of the plurality of outlets of the metering unit 1, so that each receives the corresponding plurality of doses.

The apparatus 100 comprises a plurality of male elements 4. The plurality of male elements 4 acts in conjunction with a plurality of female compression elements 3 to delimit a corresponding plurality of forming cavities. More specifically, the plurality of male elements 4 is configured to compress the plurality of doses by forcing each of them to occupy the respective forming cavity so as to make a plurality of parisons simultaneously by compression moulding. More specifically, the plurality of female compression elements 3 and the plurality of male elements 4 are movable relative to each other along a longitudinal axis L between an open position and a closed position. At the open position, the plurality of male elements 4 and the plurality of female compression elements 3 are spaced apart so they do not interfere with each other. At the closed position, the plurality of male elements 4 and the plurality of female compression elements 3 are close together so they compress the plurality of doses and force them to occupy the respective plurality of forming cavities.

The plurality of female compression elements 3 is arranged according to a matrix of female compression elements; preferably, the matrix of female compression elements includes one row and n columns of female compression elements, that is to say, n female compression elements of the plurality of female compression elements are arranged in a single line.

In an example, the matrix of female compression elements constitutes a structure 31 that corresponds to a multi-cavity mould; the female compression elements of the matrix are integral with each other (that is to say, integral with the related structure 31).

The plurality of male elements 4 is arranged according to a matrix of male elements; preferably, the matrix of male elements comprises one row and n columns of male elements, that is to say, n male elements of the plurality of male elements 4 are arranged in a single line.

In an example, the matrix of male elements constitutes a structure 41 that corresponds to a multi-punch mould; the male elements of the matrix are integral with each other (that is to say, integral with the related structure 41).

The apparatus 100 comprises an actuating unit 9 to move the plurality of female compression elements 3 between the open position and the closed position relative to the plurality of male elements 4 and relative to the additional plurality of male elements 7 along the longitudinal direction L. In an example, the apparatus 100 comprises an interface element 32, connected to the structure 31 of the plurality of female compression elements 3; the interface element 32 is integral, along the longitudinal direction L, with the structure 31 of the plurality of female compression elements 3. Preferably, the interface element 32 includes a plurality of connecting elements 33, or a plurality of guides 33. The connecting elements of the plurality of connecting elements 33 connect the interface element 32 and the structure 31 in order to hold the interface element 32 and the structure 31 together as one along the longitudinal direction L. The connecting elements of the plurality of connecting elements 33 constitute a corresponding plurality of guides to allow moving the structure 31, that is, the plurality of female compression elements 3, along the first transverse axis T1, relative to the interface element 32.

In an example, the actuating unit 9 is connected to the interface element 32 to move the interface element 32, that is, the structure 31 of the plurality of female compression elements 3, along the longitudinal direction L towards the plurality of male elements 4 or the additional plurality of male elements 7. More specifically, the actuating unit 9 comprises an actuator 90.

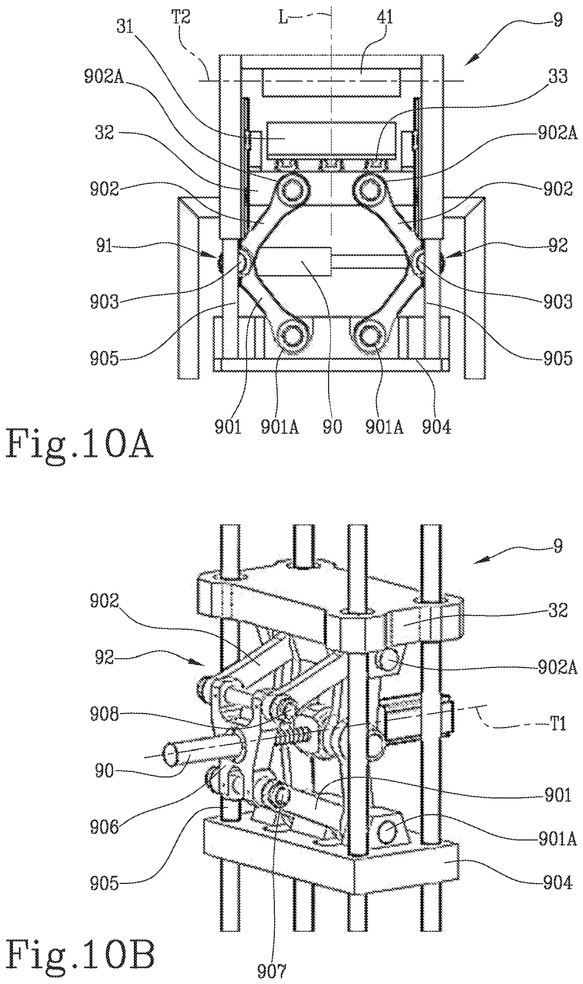

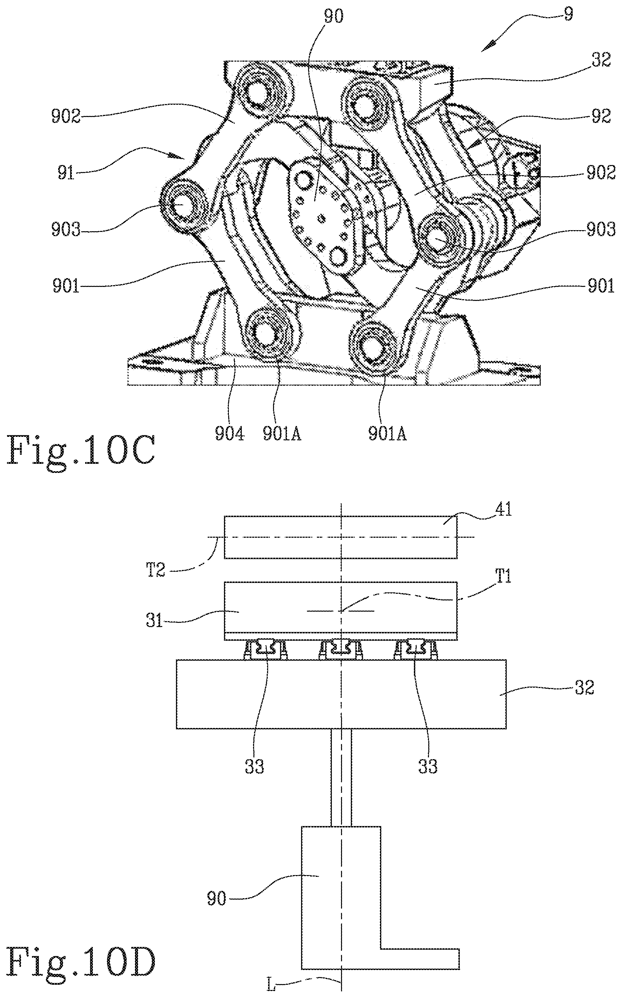

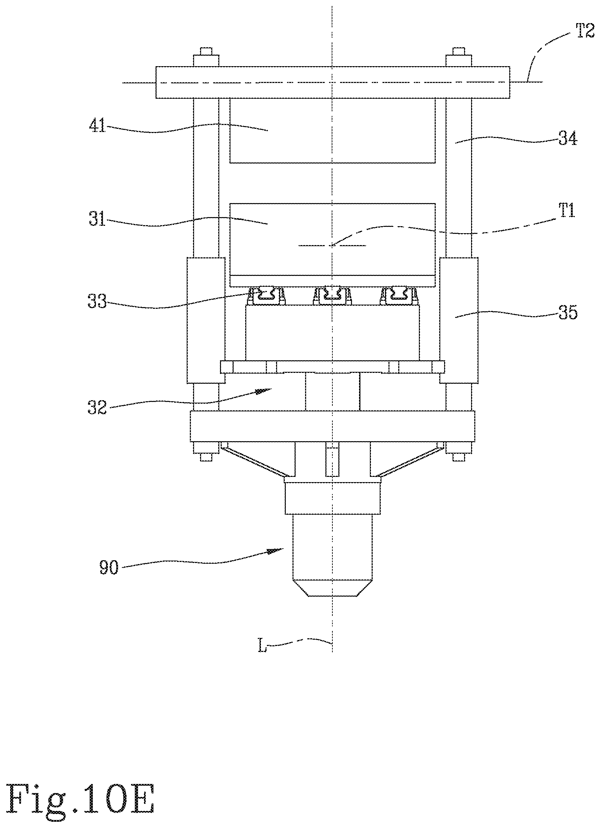

In an example, the actuating unit also comprises a toggle mechanism. The toggle mechanism may be made in various different configurations (variant embodiments), illustrated by way of example in Figures 10A, 10B and 10C.

In an example embodiment, the actuator 90 is a direct actuator; for example, the direct actuator 90 may include a linear motor or a pneumatic cylinder. In another example, the direct actuator includes a rack and pinion.

In an example, the actuator 90 is a motor; the actuator 90 moves the interface element 32, the interface element 32 including a plurality of uprights 34 and a corresponding plurality of cylindrical guides 35, where the cylindrical guides 35 are constrained to slide on the plurality of uprights 34; the interface element 32 is connected to the structure 31 by the connecting elements 33.

In an example, the toggle mechanism comprises a first toggle 91 and a second toggle 92; the first toggle 91 and the second toggle 92 each include a lower lever 901 and an upper lever 902; The lower lever 901 and the upper lever 902 are articulated to each other at a pivot point 903 to move towards and away from each other along the second transverse axis T2. The lower lever 901 is connected, at one end of it 901A, to a base 904. The upper lever 902 is connected, at one end of it 902A, to the interface element 32. The actuator 90, in the example of Figure 10A, a hydraulic cylinder or an electric actuator (or, as illustrated in the example of Figure 10C, a crank actuator), is connected to the first toggle 91 and to the second toggle 92 to move the corresponding lower lever 901 and upper lever 902 towards and away from each other along the longitudinal axis L; the first toggle 91 and the second toggle 92 are connected to a guide 905 in such a way that, when driven by the actuator 90, they are constrained to move in a single plane along the longitudinal axis L.

In another example, the toggle mechanism comprises a toggle 91; the toggle 91 includes a lower lever 901, an upper lever 902 and an intermediate lever 906, articulated to each other at a first pivot point 907 and at a second pivot point 908; the lower lever 901 is connected, at one end of it 901A, to a base 904 and the upper lever 902 is connected, at one end of it 902A, to the interface element 32. The actuator 90, in the example of Figure 10B, a screw actuator, is connected to the first toggle 91 to move the lower lever 901, the upper lever 902 and the intermediate lever 906.

The apparatus 100 comprises a blow moulding station 5. The blow moulding station 5 includes a plurality of female blow moulding elements 50, configured to receive a plurality of parisons simultaneously. The blow moulding station 5 is also configured to blow mould the plurality of parisons to form a corresponding plurality of containers.

More specifically, the plurality of female blow moulding elements 50 acts in conjunction with the plurality of male elements 4 to delimit a corresponding plurality of blow moulding cavities in which the plurality of parisons are blow moulded to form containers.

The plurality of female blow moulding elements 50 is arranged according to a matrix of female compression elements; more specifically, the matrix of female blow moulding elements includes one row and n columns of female blow moulding elements, that is to say, n female blow moulding elements of the plurality of female blow moulding elements 50 are arranged in a single line.

In an embodiment illustrated, the blow moulding station 5, includes a first half blow mould 51 and a second half blow mould 52 which are movable relative to each other along a first transverse axis T1 between a closed position and an open position. At the closed position of the first half blow mould 51 and second half blow mould 52 of the blow moulding station 5, the first half blow mould 51 and second half blow mould 52 are close together to define the plurality of blow moulding cavities. At the open position of the first half blow mould 51 and second half blow mould 52 of the blow moulding station 5, the first half blow mould 51 and second half blow mould 52 are spaced apart to allow the blow moulding station 5 to receive the plurality of parisons from the plurality of male elements 4 and to allow the plurality of male elements 4 to remove the plurality of blow moulded containers from the blow moulding station 5 after being formed.

In an example illustrated, the apparatus 100 comprises an additional plurality of male elements 7. The additional plurality of male elements 7 acts in conjunction with the plurality of female compression elements 3 to delimit a corresponding plurality of forming cavities. More specifically, the additional plurality of male elements 7 is configured to compress an additional plurality of doses by forcing each of them to occupy the respective forming cavity so as to make a plurality of parisons simultaneously by compression moulding. More specifically, the plurality of female compression elements 3 and the additional plurality of male elements 7 are movable relative to each other along a longitudinal axis L between an open position and a closed position. At the open position, the additional plurality of male elements 7 and the plurality of female compression elements 3 are spaced apart so they do not interfere with each other. At the closed position, the additional plurality of male elements 7 and the plurality of female compression elements 3 are close together so they compress the additional plurality of doses and force them to occupy the respective plurality of forming cavities.

The additional plurality of male elements 7 is arranged according to an additional matrix of male elements; more specifically, the matrix of male elements comprises one row and n columns of male elements, that is to say, n male elements of the additional plurality of male elements 7 are arranged in a single line.

In an example, the additional matrix of male elements constitutes a structure 71 that corresponds to a multi-punch mould; the male elements of the additional matrix are integral with each other (that is to say, integral with the related structure 71).

In an embodiment, the apparatus 100 comprises an additional blow moulding station 6. The additional blow moulding station 6 includes an additional plurality of female blow moulding elements 60, configured to receive the additional plurality of parisons simultaneously. The blow moulding station 6 is also configured to blow mould the additional plurality of parisons to form a corresponding plurality of containers.

The additional plurality of female blow moulding elements 60 is arranged according to an additional matrix of female compression elements; more specifically, the additional matrix of female blow moulding elements includes one row and n columns of female blow moulding elements, that is to say, n female blow moulding elements of the additional plurality of female blow moulding elements 6 are arranged in a single line.

More specifically, the additional plurality of female blow moulding elements 60 acts in conjunction with the additional plurality of male elements 7 to delimit a corresponding plurality of blow moulding cavities in which the additional plurality of parisons are blow moulded to form the additional plurality of containers.

In an embodiment illustrated, the blow moulding station 6, includes a first half blow mould 61 and a second half blow mould 62 which are movable relative to each other along the first transverse axis T1 between a closed position and an open position. At the closed position of the first half blow mould 61 and second half blow mould 62 of the additional blow moulding station 6, the first half blow mould 61 and the second half blow mould 62 are close together to define the plurality of blow moulding cavities. At the open position of the first half blow mould 61 and second half blow mould 62 of the additional blow moulding station 6, the first half blow mould 61 and the second half blow mould 62 are spaced apart to allow the blow moulding station 6 to receive the additional plurality of parisons from the additional plurality of male elements 7 and to allow the additional plurality of male elements 7 to remove the additional plurality of blow moulded containers from the additional blow moulding station 6 after being formed.

In an example embodiment, the metering unit 1 comprises a plurality of metering heads, each located at the respective outlet of the plurality of outlets of the metering unit 1.

The plurality of metering heads and the plurality of female compression elements 3 are movable relative to each other along a longitudinal axis L between a close together position and a spaced apart position. In an example illustrated, at the close together position, the plurality of metering heads and the plurality of female compression elements are close together and each metering head is operatively inserted in the seat defined by the corresponding female compression element of the plurality of female compression elements 3. At the close together position, the plurality of metering heads and the plurality of female compression elements 3 act in conjunction with each other to insert the respective plurality of doses into the corresponding plurality of seats of the plurality of female compression elements 3. At the spaced apart position, the plurality of metering heads and the plurality of female compression elements 3 are spaced apart and do not interfere with each other.

The plurality of metering heads is arranged according to a matrix of metering heads, that is to say, in such a way as to form a matrix of m rows and n columns of metering heads, where m and n are positive whole numbers. Preferably, the matrix of metering heads comprises one row and n columns of metering heads, that is to say, the n metering heads of the plurality of metering heads are arranged in a single line.

The apparatus 100 comprises an unloading station 8 for blow moulded containers, configured to house blow moulded containers. The unloading station 8 includes a plurality of unloading elements 80 that define a corresponding plurality of unloading cavities, each unloading cavity being configured to house blow moulded containers.

The plurality of unloading elements 80 is arranged according to a matrix of unloading elements, that is to say, in such a way as to form a matrix of m rows and n columns of unloading elements, where m and n are positive whole numbers. Preferably, the matrix of unloading elements comprises one row and n columns of unloading elements, that is to say, n unloading elements of the plurality of unloading elements are arranged in a single line.

The plurality of unloading elements 80 acts in conjunction with the plurality of male elements 4 and an additional plurality of male elements 7 to receive the respective plurality of blow moulded containers from the plurality of male elements 4 and from the additional plurality of male elements 7, alternately.

In an example illustrated, the apparatus 100 comprises a conveyor belt 10, configured to receive the blow-moulded containers from the unloading station 8 and to transport the blow moulded containers.

Preferably, the unloading station 8 is integral with the plurality of female compression elements 3. The unloading station 8 and the plurality of female compression elements 3 move as one between a retracted position and an advanced position along the first transverse axis T1. When the unloading station 8 and of the plurality of female compression elements 3 are at the retracted position, the plurality of unloading elements 80 interacts with the plurality of male elements 4 and with the additional plurality of male elements 7 alternately to receive the respective blow moulded containers. When the unloading station 8 and of the plurality of female compression elements 3 are at the retracted position, the plurality of female compression elements 3 interacts with the plurality of metering heads of the metering unit 1 to receive the plurality of doses. When the unloading station 8 and of the plurality of female compression elements 3 are at the advanced position, the plurality of unloading elements 80 interacts with the conveyor belt 10 to release the blow moulded containers onto the conveyor belt 9 to be transported out of the apparatus 100. When the unloading station 8 and of the plurality of female compression elements 3 are at the advanced position, the plurality of female compression elements 3 is aligned with the plurality of male elements 4 and with the additional plurality of male elements 7 alternately to act in conjunction therewith and to mould by compression moulding the plurality of parisons and the additional plurality of parisons, respectively.

In an example illustrated, the plurality of male elements 4 is movable with reciprocating motion along a second transverse axis T2 between a moulding position, a blow moulding position and an unloading position. At the moulding position of the plurality of male elements 4, the plurality of male elements 4 is associated with the plurality of female compression elements 3 to mould the plurality of parisons by compression. At the blow moulding position of the plurality of male elements 4, the plurality of male elements 4 is associated with the plurality of female blow moulding elements 50 to blow mould the plurality of parisons to form the plurality of containers. At the unloading position of the plurality of male elements 4, the plurality of male elements 4 is associated with the plurality of unloading elements 80 to release the plurality of blow moulded containers into the plurality of unloading elements 80.

In an example illustrated, the additional plurality of male elements 7 is movable with reciprocating motion along a second transverse axis T2 between a moulding position, a blow moulding position and an unloading position. At the moulding position of the additional plurality of male elements 7, the additional plurality of male elements 7 is associated with the plurality of female compression elements 3 to mould the additional plurality of parisons by compression. At the blow moulding position of the additional plurality of male elements 7, the additional plurality of male elements 7 is associated with the additional plurality of female blow moulding elements 60 to blow mould the additional plurality of parisons to form the additional plurality of containers. At the unloading position of the additional plurality of male elements 7, the additional plurality of male elements 7 is associated with the plurality of unloading elements 80 to release the additional plurality of blow moulded containers into the plurality of unloading elements 80.

Preferably, when the plurality of male elements 4 is at the blow moulding position, the additional plurality of male elements 7 is at a position between the unloading position and the moulding position. Conversely, when the additional plurality of male elements 7 is at the blow moulding position, the plurality of male elements 4 is at a position between the unloading position and the moulding position.

This invention also provides a method for the continuous cycle production of containers from plastic material. This method is preferably implemented in an apparatus 100 for the continuous cycle production of containers from plastic material according to one or more of the features described above.

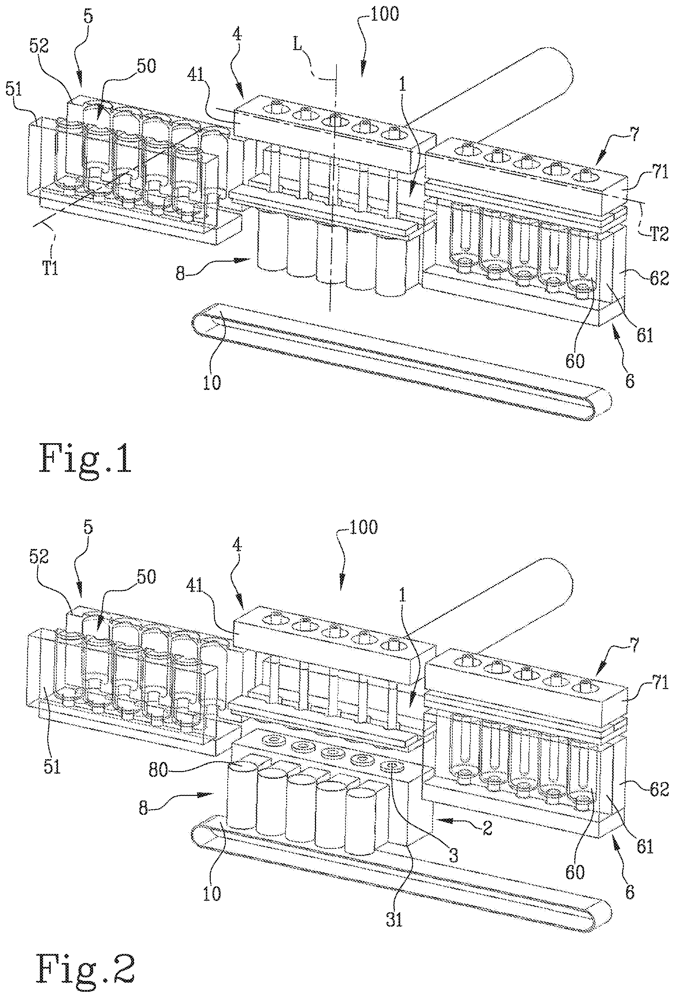

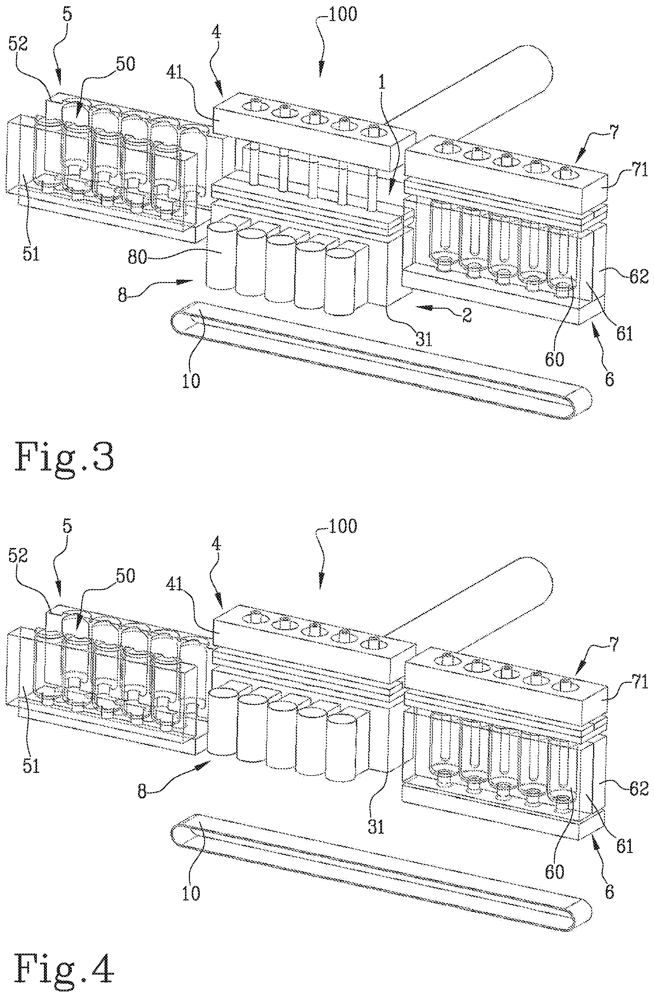

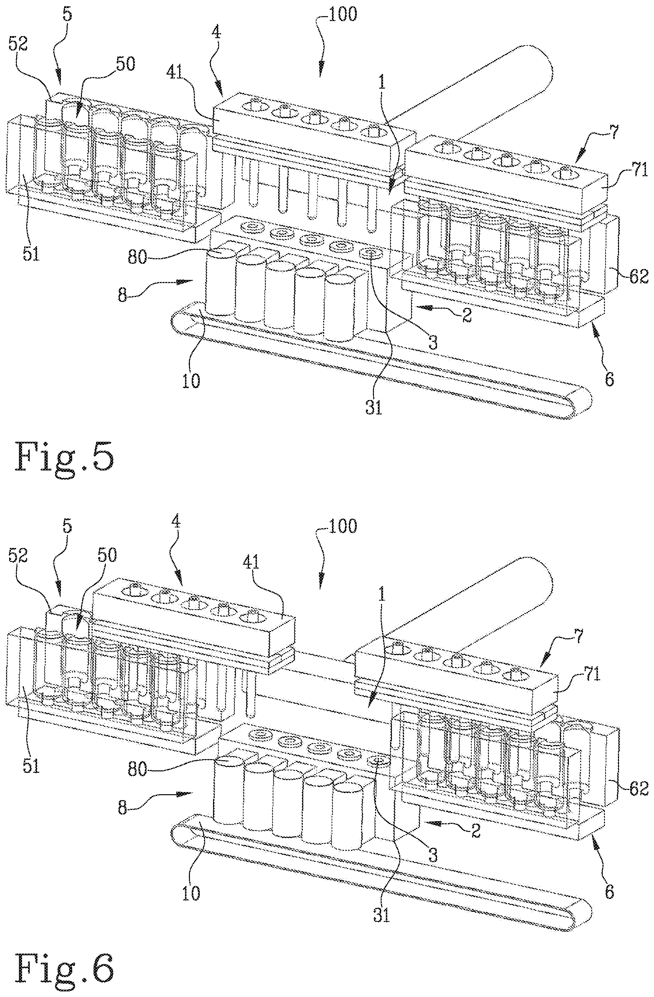

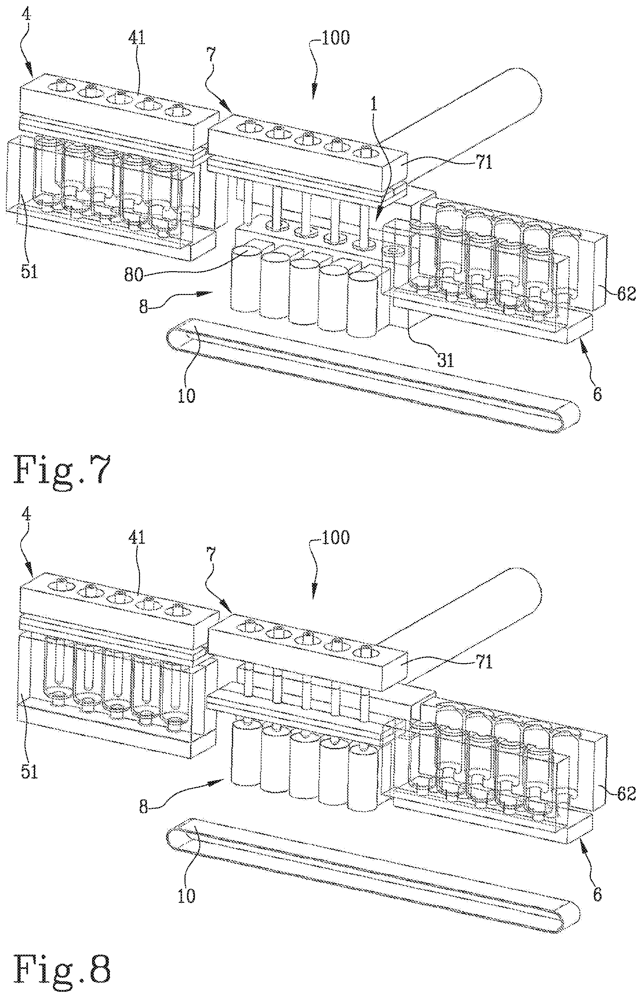

Preferably, the method for the continuous cycle production of containers comprises the following steps, performed in sequence. The steps are illustrated by way of example in Figures 1 to 8.
1. Receiving, in a metering unit 1, a flow of molten plastic produced by an extruder; separating, from a flow of molten plastic coming out of an extruder, a plurality of doses simultaneously through a respective plurality of outlets of the metering unit 1; moving a plurality of metering heads, located at the plurality of outlets of the metering unit 1, and a plurality of female compression elements 3 along a longitudinal axis L to a position where they are close together so as to insert the plurality of doses into a corresponding plurality of seats of the plurality of female compression elements 3 when the plurality of female compression elements 3 are at the retracted position; receiving the plurality of doses by means of the plurality of female compression elements 3, in the plurality of seats of the plurality of female compression elements 3 located at the plurality of metering heads of the metering unit 1; unloading a plurality of containers previously blow moulded in a blow moulding station 5 from a plurality of male elements 4 at an unloading position into a plurality of unloading elements 80 of an unloading station 8 at a retracted position; blow moulding an additional plurality of parisons by means of an additional plurality of male elements 7 to form an additional plurality of containers in an additional plurality of female blow moulding elements 60 of an additional blow moulding station 6 at a closed position of a first half mould 61 and a second half mould 62 of the additional blow moulding station 6, that is to say, a position where they are close together.
2. Moving the plurality of female compression elements 3 and the unloading station 8 along a first transverse axis T1 to an advanced position.
3. Moving along a second transverse axis T2 to a moulding position of the plurality of male elements 4 and moving along a longitudinal axis L towards a closed position between the plurality of male elements 4 and the plurality of female compression elements 3.
4. Moving along the longitudinal axis L to a closed position of the plurality of male elements 4 and the plurality of female compression elements 3; compressing the plurality of doses located in the respective plurality of seats of the plurality of female compression elements 3 to compress the plurality of doses so that each of them is forced to occupy the respective forming cavity so as to form the plurality of parisons simultaneously by compression moulding.
5. Moving the plurality of female compression elements 3 and the plurality of male elements 4 away from each other to an open position; moving the first half mould 61 and the second half mould 62 of the additional blow moulding station 6 away from each other when the additional plurality of parisons have been blow moulded to form containers; releasing the blow moulded containers onto a conveyor belt 10 by means of the plurality of unloading elements 8.
6. Moving the plurality of male elements 4 along the second transverse axis T2 to transport the plurality of parisons towards the blow moulding station 5; moving the unloading station 8 and the plurality of female compression elements 3 along the first transverse axis **T1** to the retracted position; moving the additional plurality of male elements 7 along the second transverse axis T2 towards the unloading station 8 to unload the additional plurality of blow moulded containers.
7. Moving the plurality of male elements 4 along the second transverse axis T2 to a blow moulding position; moving the unloading station 8 and the plurality of female compression elements 3 along the first transverse axis T1 to the retracted position; moving the additional plurality of male elements 7 along the second transverse axis T2 to an unloading position.
8. Moving a first half mould 51 and a second half mould 52 of the blow moulding station 5 along the first transverse axis T1 to a closed position and blow moulding the plurality of parisons in a plurality of female blow moulding elements 50 to form a corresponding plurality of containers; unloading the additional plurality of blow moulded containers from the additional plurality of male elements 7 into the plurality of unloading elements 80.

It is understood that each of the features (and steps) that does not necessitate the presence of a blow moulding station (and a step of blow moulding) can be applied in combination with an apparatus (and a method) for the continuous cycle production of items from plastic material, for which a blow moulding station (or a step of blow moulding) may not be provided; these features include, for example, the presence of an unloading station for moulded items, the actuating unit for moving a plurality of male elements and a plurality of female elements relative to each other, and other features described above.

## Claims

1. An apparatus (100) for the continuous cycle production of containers from plastic material, comprising:
- a metering unit (1) configured to receive from an extruder a flow of molten plastic and including a plurality of outlets configured to produce a corresponding plurality of doses simultaneously from the flow of molten plastic;
- a forming station (2) including a plurality of female compression elements (3) which can be positioned at the plurality of outlets of the metering unit (1) and which define a corresponding plurality of seats configured to receive the plurality of doses simultaneously from the plurality of outlets of the metering unit (1);
- a plurality of male elements (4) acting in conjunction with the plurality of female compression elements (3) to delimit a corresponding plurality of forming cavities and being configured to compress the plurality of doses by forcing each of them to occupy the respective forming cavity so as to make a plurality of parisons simultaneously by compression moulding;
- a blow moulding station (5) configured to receive the parisons of the plurality of parisons and to blow mould the plurality of parisons to form a corresponding plurality of containers.

2. The apparatus (100) according to claim 1, wherein the blow moulding station (5) includes a plurality of female blow moulding elements (50), configured to act in conjunction with the plurality of male elements (4) to delimit a corresponding plurality of blow moulding cavities to blow mould the plurality of parison simultaneously therein.

3. The apparatus (100) according to claim 2, comprising an additional blow moulding station (6) that includes a corresponding additional plurality of female blow moulding elements (60) to blow mould a plurality of parison simultaneously therein while another plurality of parisons is made by compression moulding in the plurality of female compression elements (3).

4. The apparatus (100) according to claim 3, comprising an additional plurality of male elements (7), wherein the plurality of male elements (4) and the additional plurality of male elements (7) are configured to act in conjunction with the plurality of female compression elements (3) to delimit the corresponding plurality of forming cavities, and are also configured to act in conjunction with the plurality of female blow moulding elements (5) and with the additional plurality of female blow moulding elements (6), respectively.

5. The apparatus (100) according to claim 4, wherein the plurality of male elements (4) and the additional plurality of male elements (7) are each movable with reciprocating motion between
i) a moulding position, where it is associated with the plurality of female compression elements (3), and
ii) a blow moulding position, where it is associated with the plurality of female blow moulding elements (50) or the additional plurality of female blow moulding elements (60),
respectively.

6. The apparatus (100) according to any one of the preceding claims, wherein the plurality of female compression elements (3) is movable with reciprocating motion between
a retracted position, where the female compression elements of the plurality of female compression elements (3) interact with the metering unit (1) to receive respective doses, and
an advanced position, where the female compression elements of the plurality of female compression elements (3) are aligned with the male elements of the plurality of male elements (4) to act in conjunction therewith.

7. The apparatus (100) according to any one of the preceding claims, wherein the metering unit (1) comprises a plurality of metering heads, each being located at a respective outlet of the plurality of outlets of the metering unit (1) and being movable vertically between a spaced apart position and a close together position, where it is operatively inserted in a corresponding seat defined by a respective female compression element of the plurality of female compression elements (3).

8. The apparatus (100) according to any one of the preceding claims, comprising an unloading station (8) for blow moulded containers, including a plurality of unloading elements (80) that define a corresponding plurality of unloading cavities, each unloading cavity being configured to house the blow moulded containers.

9. The apparatus (100) according to claim 8, comprising an additional plurality of male elements (7), wherein the plurality of unloading elements (80) acts in conjunction with the plurality of male elements (4) and with the additional plurality of male elements (7) to receive the respective plurality of blow moulded containers from the plurality of male elements (4) and from the additional plurality of male elements (7), alternately.

10. The apparatus (100) according to claim 9, comprising a conveyor belt (10), wherein the unloading station (8) is integral with the plurality of female compression elements (3) and moves between
a retracted position, wherein the unloading elements of the plurality of unloading elements (80) interact with the plurality of male elements (4) and with the additional plurality of male elements (7), alternately, to receive the blow moulded containers, and wherein the female compression elements of the plurality of female compression elements (3) interact with the metering unit (1) to receive respective doses, and
an advanced position, where the unloading elements of the plurality of unloading elements (80) interact with the conveyor belt (10) to release the blow moulded containers onto the conveyor belt (10) to be transported out of the apparatus (100), and wherein the female compression elements of the plurality of female compression elements (3) are aligned with the male elements of a plurality of male elements (4) to act in conjunction therewith.

11. The apparatus (100) according to any one of claims 8 to 10, wherein the plurality of male elements (4) is movable with reciprocating motion between
a moulding position, where it is associated with the plurality of female compression elements (3),
a blow moulding position, where it is associated with the plurality of female blow moulding elements (50), and
an unloading position, where it is associated with the plurality of unloading elements (80).

12. The apparatus (100) according to claim 11, comprising an additional plurality of male elements (7), wherein the additional plurality of male elements (7), when the plurality of male elements (4), is at the blow moulding position, is at a position between the unloading position and the moulding position.

13. A method for the continuous cycle production of containers from plastic material, comprising the following steps:
- receiving in a metering unit (1) a flow of molten plastic produced by an extruder;
- separating from the flow of molten plastic a plurality of doses simultaneously through a respective plurality of outlets of the metering unit (1);
- providing a plurality of female compression elements (3) to define a corresponding plurality of seats;
- receiving the plurality of doses in the corresponding plurality of seats of the plurality of female compression elements (3);
- providing a plurality of male elements (4) that is configured to act in conjunction with the plurality of female compression elements (3) to define a corresponding plurality of forming cavities;
- compressing each dose into a respective forming cavity by means of the plurality of male elements (4) so as to make a plurality of parisons simultaneously by compression moulding;
- receiving the plurality of moulded parisons in a blow moulding station (5) and blow moulding the plurality of parisons to form a corresponding plurality of containers.

14. The method according to claim 13, further comprising the following steps:
- providing a plurality of female blow moulding elements (50);
- blow moulding a plurality of parisons simultaneously into the plurality of female blow moulding elements (50).

15. The method according to claim 14, further comprising the following steps:
- providing an additional blow moulding station (6) that includes a corresponding additional plurality of female blow moulding elements (60);
- blow moulding a plurality of parisons simultaneously in the additional plurality of female blow moulding elements (60) while another plurality of parisons is made by compression moulding in the plurality of female compression elements (3).

## Patentansprüche

1. Vorrichtung (100) zur kontinuierlichen Herstellung von Behältern aus Kunststoff, umfassend:
- eine Dosiereinheit (1), die ausgelegt ist, um von einem Extruder einen Strom geschmolzenen Kunststoffs zu empfangen, und einschließend eine Vielzahl von Auslässen, die ausgelegt sind, um eine entsprechende Vielzahl von Dosierungen gleichzeitig aus dem Strom geschmolzenen Kunststoffs zu erzeugen;
- eine Bildungsstation (2), einschließend eine Vielzahl von Nutpresselementen (3), die an der Vielzahl von Auslässen der Dosiereinheit (1) positioniert werden können und die eine entsprechende Vielzahl von Sitzen definieren, die ausgelegt sind, um die Vielzahl von Dosierungen gleichzeitig von der Vielzahl von Auslässen der Dosiereinheit (1) zu empfangen;
- eine Vielzahl von Federelementen (4), die in Verbindung mit der Vielzahl von Nutpresselementen (3) wirken, um eine entsprechende Vielzahl von Bildungshohlräumen zu begrenzen, und die ausgelegt sind, um die Vielzahl von Dosierungen zu pressen, indem eine jede davon forciert wird, den jeweiligen Bildungshohlraum zu besetzen, sodass eine Vielzahl von Vorformlingen gleichzeitig durch Pressformen hergestellt wird;
- eine Blasformungsstation (5), die ausgelegt ist, um die Vorformlinge der Vielzahl von Vorformlingen zu empfangen und die Vielzahl von Vorformlingen per Blasformen so zu formen, dass eine entsprechende Vielzahl von Behältern gebildet wird.

2. Vorrichtung (100) nach Anspruch 1, wobei die Blasformungsstation (5) eine Vielzahl von Nutblasformungselementen (50) einschließt, die ausgelegt sind, um in Verbindung mit der Vielzahl von Federelementen (4) zu wirken, um eine entsprechende Vielzahl von Blasformungshohlräumen zum Blasformen der Vielzahl von Vorformlingen gleichzeitig darin zu begrenzen.

3. Vorrichtung (100) nach Anspruch 2, umfassend eine zusätzliche Blasformungsstation (6), die eine entsprechende zusätzliche Vielzahl von Nutblasformungselementen (60) einschließt, um per Blasformen eine Vielzahl von Vorformlingen gleichzeitig darin zu formen, während eine weitere Vielzahl von Vorformlingen per Pressformen in der Vielzahl von Nutpresselementen (3) hergestellt wird.

4. Vorrichtung (100) nach Anspruch 3, umfassend eine zusätzliche Vielzahl von Federelementen (7), wobei die Vielzahl von Federelementen (4) und die zusätzliche Vielzahl von Federelementen (7) ausgelegt sind, um in Verbindung mit der Vielzahl von Nutpresselementen (3) zu wirken, um die entsprechende Vielzahl von Bildungshohlräumen zu begrenzen, und ferner ausgelegt sind, um jeweils in Verbindung mit der Vielzahl von Nutblasformungselementen (5) und mit der zusätzlichen Vielzahl von Nutblasformungselementen (6) zu wirken.

5. Vorrichtung (100) nach Anspruch 4, wobei die Vielzahl von Federelementen (4) und die zusätzliche Vielzahl von Federelementen (7) mit einer Pendelbewegung jeweils zwischen
i) einer Formungsposition, in der sie mit der Vielzahl von Nutpresselementen (3) assoziiert ist, und
ii) einer Blasformungsposition, in der sie mit der Vielzahl von Nutblasformungselementen (50) oder der zusätzlichen Vielzahl von Nutblasformungselementen (60) assoziiert ist, bewegbar sind.

6. Vorrichtung (100) nach einem der vorhergehenden Ansprüche, wobei die Vielzahl von Nutpresselementen (3) mit einer Pendelbewegung zwischen
einer eingefahrenen Position, in der die Nutpresselemente der Vielzahl von Nutpresselementen (3) mit der Dosiereinheit (1) interagieren, um jeweilige Dosierungen zu empfangen, und
einer ausgefahrenen Position, in der die Nutpresselemente der Vielzahl von Nutpresselementen (3) fluchtend zu den Federelementen der Vielzahl von Federelementen (4) ausgerichtet sind, um in Verbindung damit zu wirken, bewegbar ist.

7. Vorrichtung (100) nach einem der vorhergehenden Ansprüche, wobei die Dosiereinheit (1) eine Vielzahl von Dosierköpfen umfasst, die sich jeweils an einem jeweiligen Auslass der Vielzahl von Auslässen der Dosiereinheit (1) befinden und vertikal zwischen einer beabstandeten Position und einer zusammengeführten Position, in der sie betriebswirksam in einen entsprechenden Sitz eingefügt sind, der durch ein jeweiliges Nutpresselement der Vielzahl von Nutpresselementen (3) definiert ist, bewegbar sind.

8. Vorrichtung (100) nach einem der vorhergehenden Ansprüche, umfassend eine Entladestation (8) für per Blasformen geformte Behälter, einschließend eine Vielzahl von Entladeelementen (80), die eine entsprechende Vielzahl von Entladehohlräumen definieren, wobei ein jeder Entladehohlraum ausgelegt ist, um die per Blasformen geformten Behälter unterzubringen.

9. Vorrichtung (100) nach Anspruch 8, umfassend eine zusätzliche Vielzahl von Federelementen (7), wobei die Vielzahl von Entladeelementen (80) in Verbindung mit der Vielzahl von Federelementen (4) und mit der zusätzlichen Vielzahl von Federelementen (7) wirkt, um die jeweilige Vielzahl von per Blasformen geformten Behältern abwechselnd von der Vielzahl von Federelementen (4) und von der zusätzlichen Vielzahl von Federelementen (7) zu empfangen.

10. Vorrichtung (100) nach Anspruch 9, umfassend ein Förderband (10), wobei die Entladestation (8) in einem Stück mit der Vielzahl von Nutpresselementen (3) ausgebildet ist und sich zwischen
einer eingefahrenen Position, in der die Entladeelemente der Vielzahl von Entladeelementen (80) abwechselnd mit der Vielzahl von Federelementen (4) und mit der zusätzlichen Vielzahl von Federelementen (7) interagieren, um die per Blasformen geformten Behälter zu empfangen, und wobei die Nutpresselemente der Vielzahl von Nutpresselementen (3) mit der Dosiereinheit (1) interagieren, um jeweilige Dosierungen zu empfangen, und
einer ausgefahrenen Position bewegt, in der die Entladeelemente der Vielzahl von Entladeelementen (80) mit dem Förderband (10) interagieren, um die per Blasformen geformten Behälter auf dem Förderband (10) freizugeben, sodass diese aus der Vorrichtung (100) austransportiert werden, und wobei die Nutpresselemente der Vielzahl von Nutpresselementen (3) fluchtend zu den Federelementen einer Vielzahl von Federelementen (4) ausgerichtet sind, um in Verbindung damit zu wirken.

11. Vorrichtung (100) nach einem der Ansprüche 8 bis 10, wobei die Vielzahl von Federelementen (4) mit einer Pendelbewegung zwischen
einer Formungsposition, in der sie mit der Vielzahl von Nutpresselementen (3) assoziiert ist,
einer Blasformungsposition, in der sie mit der Vielzahl von Nutblasformungselementen (50) assoziiert ist, und einer Entladeposition, in der sie mit der Vielzahl von Entladeelementen (80) assoziiert ist, bewegbar ist.

12. Vorrichtung (100) nach Anspruch 11, umfassend eine zusätzliche Vielzahl von Federelementen (7), wobei sich die zusätzliche Vielzahl von Federelementen (7), wenn sich die Vielzahl von Federelementen (4) an der Blasformungsposition befindet, an einer Position zwischen der Entladeposition und der Formungsposition befindet.

13. Verfahren zur kontinuierlichen Herstellung von Behältern aus Kunststoff, umfassend die folgenden Schritte:
- Empfangen eines von einem Extruder erzeugten Stroms geschmolzenen Kunststoffs in einer Dosiereinheit (1);
- Trennen einer Vielzahl von Dosierungen aus dem Strom geschmolzenen Kunststoffs gleichzeitig durch eine jeweilige Vielzahl von Auslässen der Dosiereinheit (1);
- Bereitstellen einer Vielzahl von Nutpresselementen (3), um eine entsprechende Vielzahl von Sitzen zu definieren;
- Empfangen der Vielzahl von Dosierungen in der entsprechenden Vielzahl von Sitzen der Vielzahl von Nutpresselementen (3);
- Bereitstellen einer Vielzahl von Federelementen (4), die ausgelegt sind, um in Verbindung mit der Vielzahl von Nutpresselementen (3) zu wirken, um eine entsprechende Vielzahl von Bildungshohlräumen zu definieren;
- Pressen einer jeden Dosierung in einen jeweiligen Bildungshohlraum mittels der Vielzahl von Federelementen (4), sodass eine Vielzahl von Vorformlingen gleichzeitig durch Pressformen hergestellt wird;
- Empfangen der Vielzahl von geformten Vorformlingen in einer Blasformungsstation (5) und Blasformen der Vielzahl von Vorformlingen, um eine entsprechende Vielzahl von Behältern zu bilden.

14. Verfahren nach Anspruch 13, ferner umfassend die folgenden Schritte:
- Bereitstellen einer Vielzahl von Nutblasformungselementen (50);
- Blasformen einer Vielzahl von Vorformlingen gleichzeitig in die Vielzahl von Nutblasformungselementen (50).

15. Verfahren nach Anspruch 14, ferner umfassend die folgenden Schritte:
- Bereitstellen einer zusätzlichen Blasformungsstation (6), die eine entsprechende zusätzliche Vielzahl von Nutblasformungselementen (60) einschließt;
- Blasformen einer Vielzahl von Vorformlingen gleichzeitig in der zusätzlichen Vielzahl von Nutblasformungselementen (60), während eine andere Vielzahl von Vorformlingen per Pressformen in der Vielzahl von Nutpresselementen (3) hergestellt wird.

## Revendications

1. Appareil (100) destiné à la production en cycle continu de récipients à partir de matière plastique, comprenant :
- une unité de dosage (1) configurée pour recevoir d'une extrudeuse un flux de plastique fondu et incluant une pluralité de sorties configurées pour produire une pluralité correspondante de doses simultanément à partir du flux de plastique fondu ;
- un poste de formage (2) incluant une pluralité d'éléments de compression femelles (3) qui peuvent être positionnés au niveau de la pluralité de sorties de l'unité de dosage (1) et qui définissent une pluralité correspondante de sièges configurés pour recevoir la pluralité de doses simultanément à partir de la pluralité de sorties de l'unité de dosage (1) ;
- une pluralité d'éléments mâles (4) agissant conjointement avec la pluralité d'éléments de compression femelles (3) pour délimiter une pluralité correspondante de cavités de formage et étant configurés pour comprimer la pluralité de doses en forçant chacune d'elles à occuper la cavité de formage respective de manière à réaliser une pluralité de paraisons simultanément par moulage par compression ;
- un poste de moulage par soufflage (5) configuré pour recevoir les paraisons de la pluralité de paraisons et pour mouler par soufflage la pluralité de paraisons pour former une pluralité correspondante de récipients.

2. Appareil (100) selon la revendication 1, dans lequel le poste de moulage par soufflage (5) inclut une pluralité d'éléments de moulage par soufflage femelles (50), configurés pour agir conjointement avec la pluralité d'éléments mâles (4) pour délimiter une pluralité correspondante de cavités de moulage par soufflage pour mouler par soufflage la pluralité de paraisons simultanément dans celles-ci.

3. Appareil (100) selon la revendication 2, comprenant un poste de moulage par soufflage supplémentaire (6) qui inclut une pluralité supplémentaire correspondante d'éléments de moulage par soufflage femelles (60) pour mouler par soufflage une pluralité de paraisons simultanément dans celui-ci tandis qu'une autre pluralité de paraisons est réalisée par moulage par compression dans la pluralité d'éléments de compression femelles (3).

4. Appareil (100) selon la revendication 3, comprenant une pluralité supplémentaire d'éléments mâles (7), dans lequel la pluralité d'éléments mâles (4) et la pluralité supplémentaire d'éléments mâles (7) sont configurés pour agir conjointement avec la pluralité d'éléments de compression femelles (3) pour délimiter la pluralité correspondante de cavités de formage, et sont également configurés pour agir conjointement avec la pluralité d'éléments de moulage par soufflage femelles (5) et avec la pluralité supplémentaire d'éléments de moulage par soufflage femelles (6), respectivement.

5. Appareil (100) selon la revendication 4, dans lequel la pluralité d'éléments mâles (4) et la pluralité supplémentaire d'éléments mâles (7) sont chacune mobiles avec un mouvement de va-et-vient entre
i) une position de moulage, où il est associé à la pluralité d'éléments de compression femelles (3), et
ii) une position de moulage par soufflage, où il est associé à la pluralité d'éléments de moulage par soufflage femelles (50) ou à la pluralité supplémentaire d'éléments de moulage par soufflage femelles (60), respectivement.

6. Appareil (100) selon l'une quelconque des revendications précédentes, dans lequel la pluralité d'éléments de compression femelles (3) est mobile avec un mouvement de va-et-vient entre
une position rétractée, où les éléments de compression femelles de la pluralité d'éléments de compression femelles (3) interagissent avec l'unité de dosage (1) pour recevoir des doses respectives, et
une position avancée, où les éléments de compression femelles de la pluralité d'éléments de compression femelles (3) sont alignés sur les éléments mâles de la pluralité d'éléments mâles (4) pour agir conjointement avec eux.

7. Appareil (100) selon l'une quelconque des revendications précédentes, dans lequel l'unité de dosage (1) comprend une pluralité de têtes de dosage, chacune étant située à une sortie respective de la pluralité de sorties de l'unité de dosage (1) et étant mobile verticalement entre une position espacée et une position rapprochée, où elle est insérée de manière opérationnelle dans un siège correspondant défini par un élément de compression femelle respectif de la pluralité d'éléments de compression femelles (3).

8. Appareil (100) selon l'une quelconque des revendications précédentes, comprenant un poste de déchargement (8) pour des récipients moulés par soufflage, incluant une pluralité d'éléments de déchargement (80) qui définissent une pluralité correspondante de cavités de déchargement, chaque cavité de déchargement étant configurée pour loger les récipients moulés par soufflage.

9. Appareil (100) selon la revendication 8, comprenant une pluralité supplémentaire d'éléments mâles (7), dans lequel la pluralité d'éléments de déchargement (80) agit conjointement avec la pluralité d'éléments mâles (4) et avec la pluralité supplémentaire d'éléments mâles (7) pour recevoir la pluralité respective de récipients moulés par soufflage de la pluralité d'éléments mâles (4) et de la pluralité supplémentaire d'éléments mâles (7), alternativement.

10. Appareil (100) selon la revendication 9, comprenant une bande transporteuse (10), dans lequel le poste de déchargement (8) est solidaire de la pluralité d'éléments de compression femelles (3) et se déplace entre
une position rétractée, dans laquelle les éléments de déchargement de la pluralité d'éléments de déchargement (80) interagissent avec la pluralité d'éléments mâles (4) et avec la pluralité supplémentaire d'éléments mâles (7), alternativement, pour recevoir les récipients moulés par soufflage, et dans laquelle les éléments de compression femelles de la pluralité d'éléments de compression femelles (3) interagissent avec l'unité de dosage (1) pour recevoir des doses respectives, et
une position avancée, où les éléments de déchargement de la pluralité d'éléments de déchargement (80) interagissent avec la bande transporteuse (10) pour libérer les récipients moulés par soufflage sur la bande transporteuse (10) pour être transportés hors de l'appareil (100), et dans laquelle les éléments de compression femelles de la pluralité d'éléments de compression femelles (3) sont alignés sur les éléments mâles d'une pluralité d'éléments mâles (4) pour agir conjointement avec ceux-ci.

11. Appareil (100) selon l'une quelconque des revendications 8 à 10, dans lequel la pluralité d'éléments mâles (4) est mobile avec un mouvement de va-et-vient entre
une position de moulage, où il est associé à la pluralité d'éléments de compression femelles (3),
une position de moulage par soufflage, où il est associé à la pluralité d'éléments de moulage par soufflage femelles (50), et
une position de déchargement, où il est associé à la pluralité d'éléments de déchargement (80).

12. Appareil (100) selon la revendication 11, comprenant une pluralité supplémentaire d'éléments mâles (7), dans lequel la pluralité supplémentaire d'éléments mâles (7), lorsque la pluralité d'éléments mâles (4), est dans la position de moulage par soufflage, est dans une position entre la position de déchargement et la position de moulage.

13. Procédé destiné à la production en cycle continu de récipients à partir de matière plastique, comprenant les étapes suivantes :
- recevoir dans une unité de dosage (1) un flux de plastique fondu produit par une extrudeuse ;
- séparer du flux de plastique fondu une pluralité de doses simultanément à travers une pluralité respective de sorties de l'unité de dosage (1) ;
- prévoir une pluralité d'éléments de compression femelles (3) pour définir une pluralité correspondante de sièges ;
- recevoir la pluralité de doses dans la pluralité de sièges correspondante de la pluralité d'éléments de compression femelles (3) ;
- prévoir une pluralité d'éléments mâles (4) qui est configurée pour agir conjointement avec la pluralité d'éléments de compression femelles (3) pour définir une pluralité correspondante de cavités de formage ;
- comprimer chaque dose dans une cavité de formage respective au moyen de la pluralité d'éléments mâles (4) de manière à réaliser une pluralité de paraisons simultanément par moulage par compression ;
- recevoir la pluralité de paraisons moulées dans un poste de moulage par soufflage (5) et mouler par soufflage la pluralité de paraisons pour former une pluralité correspondante de récipients.

14. Procédé selon la revendication 13, comprenant en outre les étapes suivantes :
- prévoir une pluralité d'éléments de moulage par soufflage femelles (50) ;
- mouler par soufflage une pluralité de paraisons simultanément dans la pluralité d'éléments de moulage par soufflage femelles (50).

15. Procédé selon la revendication 14, comprenant en outre les étapes suivantes :
- prévoir un poste de moulage par soufflage supplémentaire (6) qui inclut une pluralité supplémentaire correspondante d'éléments de moulage par soufflage femelles (60) ;
- moulage par soufflage d'une pluralité de paraisons simultanément dans la pluralité supplémentaire d'éléments de moulage par soufflage femelles (60) tandis qu'une autre pluralité de paraisons est réalisée par moulage par compression dans la pluralité d'éléments de compression femelles (3).
